# EUROPÄISCHE PATENTANMELDUNG

(11) **EP 2 071 600 A1**
(43) Veröffentlichungstag der Anmeldung: **17.06.2009**
(21) Anmeldenummer: 08021056.0
(22) Anmeldetag: 04.12.2008
(51) Int. Cl.: H01H 9/02, H02G 3/12

(54) **Fernsteuerbarer Installationsschalter**

(30) Priorität: 15.12.2007 DE 202007017558 U
(71) Anmelder: Reitz GmbH, 95460 Bad Berneck (DE)
(72) Erfinder: Fischer, Ralph, 95448 Bayreuth (DE); Bauer, Roland, 91257 Pegnitz (DE); Mattinger, Detlef, 64404 Bickenbach (DE)
(74) Vertreter: Freier, Rüdiger

(57) **Zusammenfassung**

Die Erfindung betrifft einen fernsteuerbarer Installationsschalter (1), mit einem Gehäusemodul (2) zur Unterputzmontage, mit gehäuseinnenseitig mindestens einer Leiterplatte (21,22) mit einem elektronisch ansteuerbaren Schaltelement (26) und mit einem Funkempfänger oder Transceiver (24) zum drahtlosen Schalten des Schaltelementes (26), sowie mit zwei aus dem Gehäusemodul (2) herausgeführten Tastern (14) zur manuellen Betätigung des Schaltelementes (26).

## Beschreibung

Die Erfindung bezieht sich auf einen fernsteuerbaren Installationsschalter, insbesondere zur Betätigung einer Jalousie, der zur Unterputzmontage geeignet ist.

Im Hausinstallationsbereich, insbesondere im Beleuchtungsbereich, können Funkschaltersysteme eingesetzt werden, um drahtlos eine vorhandene Installation nach- oder umzurüsten. Auch kann vorgesehen sein, komfortabel und mobil über eine Fernbedienung eine Anzahl von Leuchten oder andere Verbraucher zu schalten. Hierzu können beispielsweise funkgeschaltete Zwischenstecker eingesetzt werden, die als elektronische Schalter in die Anschlussleitung von nicht ortsfesten Geräten, wie beispielsweise Stehleuchten, nach dem einfach handhabbaren Prinzip des "plug & play" geschaltet werden. Hierzu ist in den Zwischenstecker ein Funkempfänger integriert, der eine Schalterauslösung veranlasst, sobald ein entsprechendes Funksignal erkannt wird. Derartige Zwischenstecker oder Funkzwischenstecker werden üblicherweise mit einer codierbaren Fernbedienung betrieben.

Für eine bereits bestehende und festverdrahtete Elektroinstallation können ebenfalls drahtlose Schalter vorgesehen sein, die in bereits vorhandene Schaltersysteme integrierbar sind, um das vorhandene Schaltersystem, insbesondere auch optisch bzw. hinsichtlich des Designs, zu ergänzen.

So ist es aus der DE 203 19 812 U1 bekannt, einen Schalter für Funkfernsteuerungen bereit zu stellen, der sich in die vorhandene Elektroinstallation einfügt und auch unter Putz eingesetzt werden kann. Hierbei kann es sich sowohl um einen Sender, als auch um einen Empfänger oder eine Kombination aus beiden handeln. Hierzu weist der bekannte Schalter einen Tragring zur Montage in handelsüblichen, genormten Installationsdosen auf. Der Tragring weist ein Zentralstück auf, das auf den Tragring auf der einem Abdeckrahmen mit darin geführter Schaltwippe zugewandten Oberseite montiert ist. Das Zentralstück selbst umfasst ein oberes und ein unteres Bauteil und enthält zudem alle funktechnischen Einrichtungen in Form der Sende- oder Empfangseinrichtungen. Der bekannte Schalter ist in eine Standard-Einbaudose einsetzbar.

Der Erfindung liegt die Aufgabe zu Grunde, einen besonders geeigneten, modular aufgebauten Installationsschalter anzugeben, der sowohl ein drahtloses, als auch ein manuelles Betätigen des Schalters ermöglicht.

Diese Aufgabe wird erfindungsgemäß gelöst durch die Merkmale des Anspruchs 1. Vorteilhafte Ausgestaltungen, Weiterbildungen und Varianten der Erfindung sind Gegenstand der Unteransprüche.

Hierzu weist der fernsteuerbare Installationsschalter ein Gehäusemodul auf, in dem ein elektronisch ansteuerbares Schaltelement und ein Funkempfänger oder Transceiver zum drahtlosen Schalten des Schaltelementes angeordnet sind. Zur manuellen Betätigung des Schaltelementes sind aus dem Gehäusemodul zwei Taster, d.h. vorzugsweise elastisch gelagerte oder federbelastete Tastelemente herausgeführt. Dieses Gehäusemodul ist an die Abmessungen von Einbaudosen für die Unterputzmontage angepasst und kann somit bei der Erstinstallation oder auch zum Zwecke der Umrüstung eines bestehenden Installationssystems auf ein fernbedienbares Schaltersystem in bereits vorhandener Unterputzdosen ohne zusätzlichen Aufwand in einfacher Art und Weise eingesetzt werden.

Das mit dem Gehäusemodul fest installierte elektronische Schaltelement kann somit wahlweise über einen Sender geschaltet oder manuell betätigt werden. Für die manuelle Betätigung ist besonders vorteilhaft auf das Gehäusemodul ein Tragring aufsetzbar, der mit den Tastern koppelbare Stößel aufweist. Ein auf den Tragring aufsetzbares, als Schalt- oder Dimmerwippe wirksames Betätigungselement ist dann über diese Stößel mechanisch mit den Tastern gekoppelt. Die Stößel sind vorzugsweise in einem beispielsweise domartigen Gehäuseaufbau des Tragrings geführt.

Für die Kopplung des Tragrings mit den Tastern weist das vorzugsweise allseitig geschlossene Gehäusemodul eine Bedienoberfläche mit zueinander beabstandeten Gehäuseöffnungen auf. Ist das Gehäusemodul aus einem Gehäuseunterteil und einem mit diesem verbundenen Gehäuseoberteil aufgebaut, so befindet sich die Bedienoberfläche im Gehäuseoberteil. In dieser liegen die Taster ein und sind somit von außen zugänglich.

In vorteilhafter Ausgestaltung weist der Tragring einander gegenüberliegende Rast-und/oder Lagerelemente auf. Diese sind für eine lösbare Schwenkverbindung mit der Schalt- oder Dimmerwippe ausgebildet. Zudem weist der Tragring geeigneterweise einander gegenüberliegende Rastelemente auf, die beidseitig der Stößel angeordnet und für eine lösbare Rastverbindung mit einem Abdeckrahmen ausgebildet sind. Das Gehäusemodul weist ebenfalls Rastelemente zur Herstellung einer lösbaren Rastverbindung mit dem Tragring auf. Weitere Rastelement ermöglichen eine lösbare Verbindung zwischen den Gehäuseteilen des Gehäusemoduls.

Die Tasteroberflächen können dabei über die Bedienoberfläche hinausstehen oder mit diesen fluchten. Die Taster sind in einer geeigneten Ausführungsform als Noppen einer Gummieinlage ausgebildet. Auf einer in dem Gehäusemodul angeordneten Leiterplatte sind dann zweckmäßigerweise Druckkontakte angeordnet, die mit der Gummieinlage und somit mit den Tastern zusammenwirken. Gehäuseinnenseitig sind die Taster vorzugsweise über die gehäuseinternen Druckkontakte mit einem Mikrokontroller verbundenen, an den der Funkempfänger bzw. Transceiver zur drahtlosen Ansteuerung des Schaltelementes angeschlossen ist.

Auf die Leiterplatte, die innerhalb des Gehäusemoduls möglichst nahe der Bedienoberfläche angeordnet ist, sind zweckmäßigerweise zumindest der Empfänger bzw. Transceiver und die Druckkontakte kontaktiert, während der Mikrokontroller und/oder das elektronische Schaltelement innerhalb des Gehäusemoduls auch auf einer zweiten Leiterplatte angeordnet sein können.

Die mit der Erfindung erzielten Vorteile bestehen insbesondere darin, dass mit dem sowohl drahtlos als auch manuelle betätigbaren Installationsschalt bereits vorhandene und im Wesentlichen verdrahtete Elektroinstallationen in einfacher Art und Weise um weitere Schalter ergänzt werden können. Dadurch wird der Bedienkomfort gesteigert, ohne dabei die sonst nötigen Stemmarbeiten zu verrichten. Vorzugsweise kann der erfindungsgemäße Installationsschalter einen fest installierten Schalter ersetzen, der beispielsweise an einer für eine Bedienung ungünstigen oder verdeckten Stelle positioniert ist. Auch kann zur Erhöhung des Bedienkomforts ein zusätzlicher Schalter drahtlos installiert werden, um beispielsweise eine Wechsel- oder Kreuzschaltung zum zusätzlichen Schalten eines entsprechenden Verbrauchers herzustellen.

Für derartige Erstausrüstungen oder Nachrüstungen von Elektroinstallationen ist der erfindungsgemäße Installationsschalter bereits mit allen Funktionalitäten ausgerüstet, um sowohl drahtlos als auch manuell betätigt werden zu können. Durch die Bereitstellung eines solchen Installationsschalters, der in dem Gehäusemodul bereits ein elektronisch ansteuerbares Schaltelement und einen Funkempfänger bzw. einen Transceiver aufweist und darüber hinaus mit einer mechanischen bzw. elektromechanischen Schnittstelle zur manuellen Betätigung ausgerüstet ist, können bei gleichzeitig hoher Funktionalität zusätzliche Installations- und Wartungskosten, beispielsweise für den Austausch von Sender-Batterien, vermieden werden.

Der auf das Gehäusemodul aufsetzbare Tragring deckt zweckmäßigerweise eine gehäuseoberseitige Zugangsöffnung zu einem Klemmenraum ab, nachdem die während der Installation vorgenommenen Anschlussarbeiten am Klemmenblock abgeschlossen sind. Dadurch ist auch bei abgenommener Wippe eine zuverlässige Berührungssicherheit gegenüber der Netzspannung gegeben.

Nachfolgend wird ein Ausführungsbeispiel der Erfindung anhand einer Zeichnung näher erläutert. Darin zeigen:
- Fig. 1: in perspektivischer Darstellung einen erfindungsgemäßen Installationsschalter mit Abdeckrahmen und herausgeführten Betätigungstastern bei abgenommener Schaltwippe,
- Fig. 2: den Installationsschalter gemäß Fig. 1 mit aufgesetzter Schaltwippe,
- Fig. 3 und 4: in einer Seitenansicht den Installationsschalter gemäß Fig. 1 bei von dem Gehäusemodul abgehobenen bzw. auf das Gehäusemodul aufgesetztem Tragring,
- Fig. 5: das Gehäusemodul des Installationsschalters in perspektivischer Darstellung mit Blick auf die Bedienoberfläche,
- Fig. 6: in perspektivischer Darstellung den prinzipiellen Aufbau des Installationsschalters im Gehäuseinneren,
- Fig. 7: in einem Blockschaltbild den schaltungstechnischen Aufbau des Installationsschalters mit zwei aus dem Gehäusemodul herausgeführten Tastern und einem von einem Mikrokontroller ansteuerten Schaltelement, und
- Fig. 8: in einer Darstellung gemäß Fig. 7 den Installationsschalter mit zwei ansteuerbaren Schaltelementen mit zwei bzw. vier herausgeführten Anschlüssen.

Einander entsprechende Teile sind in allen Figuren mit den gleichen Bezugszeichen versehen.

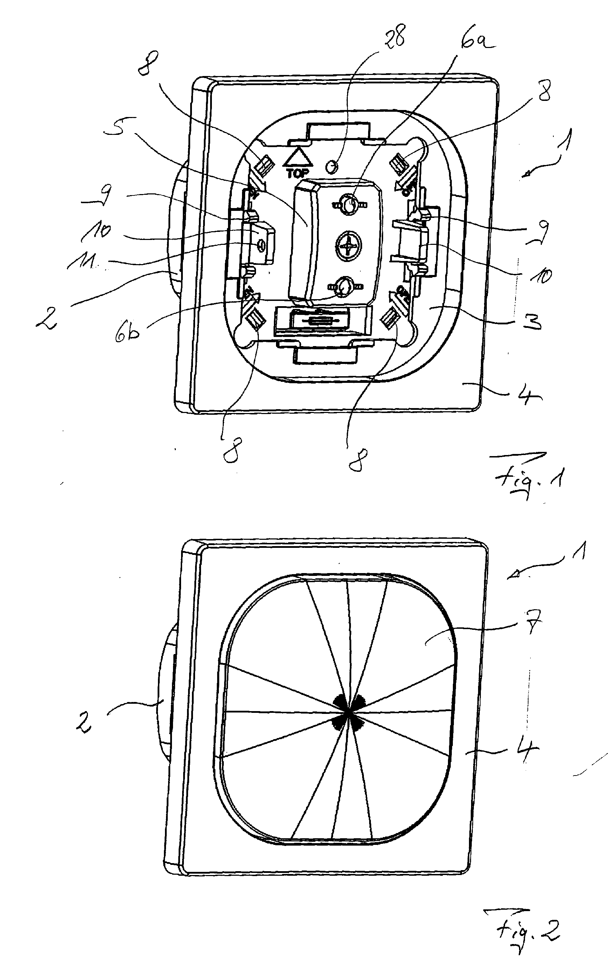

Fig. 1 zeigt den fernsteuerbaren Installationsschalter 1 mit einem Gehäusemodul 2 und einem darauf aufgesetzten Tragring 3, auf den seinerseits ein Abdeckrahmen 4 aufgesetzt ist. Der Tragring 3 weist in einem domartigen, vorzugsweise lösbaren Gehäuseaufsatz 5 zwei Betätigungsstössel 6a, 6b auf. Diese Stößel 6a, 6b sind bei aufgesetzter Schaltwippe 7 (Fig. 2) mit dieser rückseitig gekoppelt und somit über manuell betätigbar.

Zur lösbaren Verbindung des Tragrings 3 mit dem Gehäusemodul 2 sind im Ausführungsbeispiel vier einander gegenüberliegende Rastelemente 8 in den Tragringecken vorgesehen. Weitere Rastelemente 9 in Form von Schwenkzapfen des Tragrings 3 sind wiederum an gegenüberliegenden Seiten der Stößel 6a, 6b angeordnet und dienen zur lösbaren Befestigung des Abdeckrahmens 4 mit dem Tragring 3. Ferner weist der Tragring 3 als Schwenklager wirksame Schnappoder Lagerelemente 10 für eine Schwenklagerung der Schaltwippe 7 auf. Die hierzu zwischen den Rastelementen 9 angeordneten, stegartigen Lagerelemente 10 weisen entsprechende Lageröffnungen 11 auf, in die (nicht dargestellte) Schwenkzapfen eingreifen, die rückseitig an die Schaltwippe 7 angeformt sind.

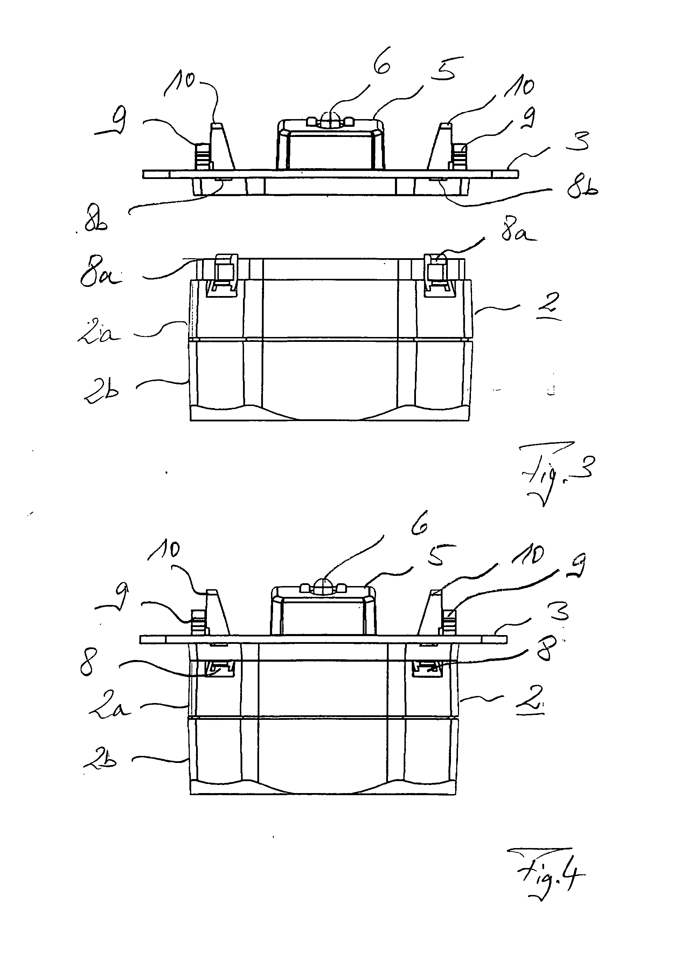

Die Fig. 3 und 4 veranschaulichen vergleichsweise deutlich die Verrastung des im Wesentlichen allseitig geschlossenen Gehäusemoduls 2 mit dem Tragring 3 mittels der Rastelemente 8. Erkennbar sind gehäuseseitige Rasthaken 8a, die in korrespondierende Rastöffnungen 8b des Tragrings 3 eingreifen. Erkennbar ist auch, dass das Gehäusemodul 2 ein Gehäuseoberteil 2a und ein Gehäuseunterteil 2b aufweist, die zweckmäßigerweise lösbar, beispielsweise ebenfalls über Schnappoder Rastelemente, miteinander verbunden sind. Das Gehäusemodul 2 besteht vorzugsweise aus Kunststoff, während der Tragring 3 aus Metall oder aus Kunststoff bestehen kann.

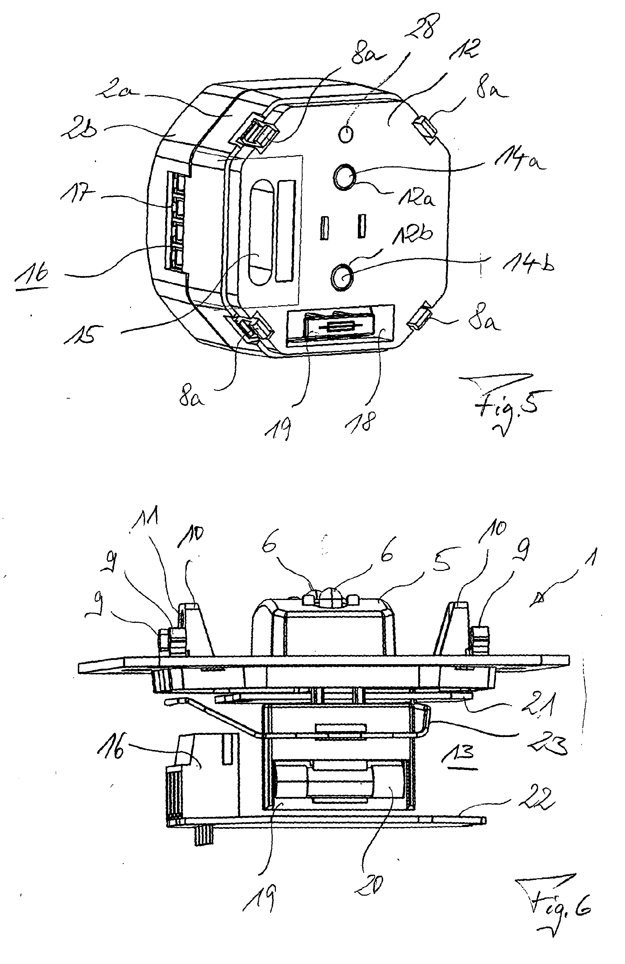

Die Fig. 5 zeigt eine Aufsicht auf eine Bedienoberfläche 12 des Gehäusemoduls 2. Erkennbar sind aus dem Gehäuseinnenraum 13 (Fig. 6) über Gehäuseöffnungen 12a und 12b herausgeführte Taster 14a bzw. 14b. Diese korrespondieren mit den Stößeln 6a und 6b des Tragrings 3. Der obere Taster 14a dient für eine "UP"-Funktion, beispielsweise einer Jalousie, oder für eine "On"-Funktion eines Schalters oder Dimmers, während der untere Taster 14b für die entsprechende "Down"- bzw. "OFF"-Funktion dient. Im Montagezustand des Tragrings 3 mit dem Gehäusemodul 2 sind die Stößel 6a, 6b und die Taster 14a, 14b derart miteinander (mechanisch) gekoppelt, das eine Betätigung des jeweiligen Stößels 6a,6b mittels der Schaltwippe 7 eine Betätigung des entsprechenden Tasters 14a bzw. 14b bewirkt.

Erkennbar in Fig. 5 sind zudem eine erste Zugangsöffnung 15 im Gehäuseoberteil 2a, die den Zugang zu einem in einem Klemmenraum des Gehäuseunterteils 2a vorgesehenen Klemmenblock 16 für im Ausführungsbeispiel vier Anschlussklemmen 17 ermöglicht. Eine weitere Zugangsöffnung 18 im Gehäuseoberteil 2a ermöglicht den Zugang zu einem Sicherungshalter 19 für eine Dehndrahtsicherung 20 (Fig. 6).

Bei auf das Gehäusemodul aufgesetztem Tragring deckt dieser die Zugangsöffnung 15 zum Klemmenraum ab, so dass bei abgenommener Wippe 7 eine zuverlässige Berührungssicherheit gegeben ist, nachdem die Installationsarbeiten mit bestimmungsgemäßem Netzleitungsanschluss am Klemmenblock 16 abgeschlossen sind. Eine einfache Montage mit zuverlässiger Verdrehsicherung des Tragrings 3 gegenüber dem Gehäusemodul 2 ist durch eine (nicht dargestellte) mechanische Codierung gegeben, beispielsweise in Form einer am Tragring 3 angeformten Lasche, die nur in einer bestimmten Relativstellung in eine Ausnehmung am Gehäusemodul 2 eingreifen kann.

Fig. 6 zeigt prinzipiell den gehäuseinternen Aufbau des Installationsschalters mit gehäuseintern, d.h. im Gehäuseinnenraum 13 des Gehäusemoduls 2 einer oberen Leiterplatte 21 und einer unteren Leiterplatte 22. Die untere Leiterplatte 22 trägt den Klemmenblock 16 sowie weitere, nicht dargestellte elektrische und/oder elektronische Bauelemente. Die obere Leiterplatte 21 führt eine Antenne 23 eines in Fig. 6 nicht sichtbaren elektronischen Empfänger- oder Transceiverbausteins. In Fig. 6 ebenfalls nicht sichtbar sind auf der unteren Leiterplatte 22 oder auf der oberen Leiterplatte 21 ein elektronisches Schaltelement und ein Mikrokontroller vorgesehen.

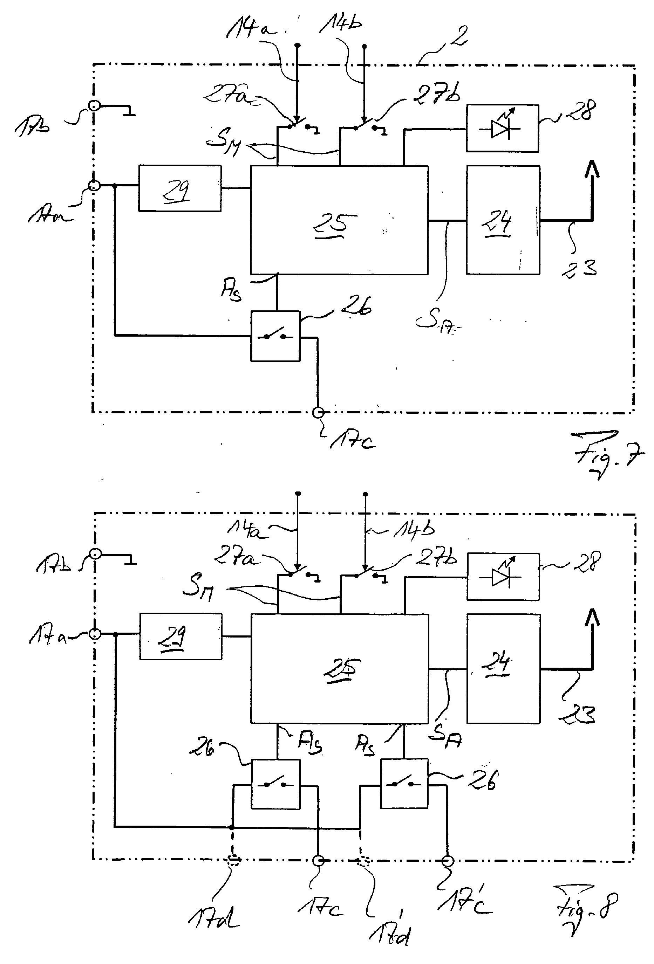

Die in dem Gehäusemodul 2 vorgesehenen und dort auf den Leiterplatten oder Platinen 21, 22 miteinander elektrisch verbundenen Bausteine und Komponenten, insbesondere der Funkempfänger bzw. Transceiver 24, der Mikrokontroller 25 und das elektronische Schaltelement 26, sind in den Blockschaltbildern der Fig. 7 und 8 dargestellt. Erkennbar sind die aus dem Gehäusemodul 2 herausgeführten und im Ausführungsbeispiel mit der Bedienoberfläche 12 fluchtenden Taster 14a, 14b, die gehäuseintern mit Druckkontakten 27a bzw. 27b verbunden sind. Die Druckkontakte 27a, 27b wiederum sind mit dem Mikroprozessor 25 eingangsseitig verbunden.

Mit dem Mikroprozessor 25 des Weiteren verbunden ist eine Anzeige 28 in Form einer Leuchtdiode (LED) zur Statusanzeige des Installationsschalters 1. Diese Status- und/oder Bedienanzeige 28 ist entsprechenden Öffnungen in der Bedienoberfläche 12 des Gehäusemoduls 2 und des Tragrings 3 hinterlegt, wie in den Figuren 1 und 5 erkennbar ist.

Ferner ist der Mikrokontroller 25 mit einer Spannungsversorgung 29 verbunden, die seinerseits an einen Phasenanschluss 17a eines über den Klemmenblock 16 herstellbaren Netzanschlusses geführt ist. Ein weiterer Anschluss symbolisiert den Nullleiteranschluss 17b des Netzes. Der phasenseitige Netzanschluss 17a ist zudem über das ansteuerbare elektronische Schaltelement 26 an einen Ausgangsanschluss 17c geführt. Ansteuerseitig ist das elektronische Schaltelement 26 mit einem entsprechenden Steuerausgang Aₛ des Mikroprozessors 25 verbunden.

Das elektronische Schaltelement 26 dient zur Lastschaltung. Die über das Schaltelement 26 auszuführenden Schaltfunktionen werden dabei über den Mikrokontroller 25 gesteuert. Hierzu erhält der Mikrokontroller 25 eingangsseitig entweder über den Funkempfänger bzw. Transceiver 24 ein entsprechendes drahtlos empfangenes Schaltsignal S_{A} oder über die Druckkontakte 27a, 27b ein manuelles Schaltsignal S_{M}. Die Erzeugung des manuellen Schaltsignals S_{M} erfolgt über die infolge einer Betätigung der Schaltwippe 7 erzeugte Übertragung einer entsprechenden mechanische Verschiebung der Stößel 6a, 6b auf die mit diesen gekoppelten Taster 14a bzw. 14b. Die Taster 14a, 14b sind zweckmäßigerweise Bestandteil einer gemeinsamen Gummimatte, die in nicht dargestellter Art und Weise innerhalb des Gehäusemoduls 2 auf der Rückseite der Bedienoberfläche 12 am Gehäuseoberteil 2a unter Herausführung von die beiden Taster 14a, 14b bildenden Gumminoppen anliegt.

In der Ausführungsform gemäß Fig. 7 kann das elektronische Schaltelement 26 ein Relais, ein MOSFET oder ein Triac sein. Bei der Ausführung mit einem Relais als Schaltelement 26 handelt es sich bei dem Installationsschalter 1 um einen sowohl drahtlos per Funk als auch manuell betätigbaren Schalter. Bei der Ausführungsform mit einem MOSFET oder einem Triac ist der Installationsschalter 1 als mittels Funk oder manuell steuerbarer Dimmer ausgeführt.

Bei der Ausführungsform nach Fig. 8 sind im Unterschied zur Ausführungsform nach Fig. 7 zwei elektronische Schaltelemente 26 vorgesehen. Hierbei handelt es sich zweckmäßigerweise um zwei Relais. In dieser Ausführungsform arbeitet der Installationsschalter 1 vorzugsweise als Jalousieschalter. Hierbei können die Schalt- bzw. Relaiskontakte jeweils einzeln über die Ausgangsanschlüsse 17c und 17'c oder jeweils paarweise über die Ausgangsanschlüsse 17c und 17d bzw. 17'c und 17'd herausgeführt werden.

In Verbindung mit einem Hausbussystem kann der Installationsschalter 1 mittels beispielsweise einer Fernbedienung auf einen bestimmten Sende- und/oder Empfangskanal eingelernt werden. Auf diese Weise wäre der Installationsschalter 1 in das hausinterne Stromnetz integriert und könnte Schaltsignale senden und empfangen oder empfangene Signale an einem anderen Installationsschalter 1 weiterleiten.

Das Grundmodul des Installationsschalters 1, das im Wesentlichen aus dem Gehäusemodul 2 mit den darin enthaltenen elektronischen Elementen und Bausteinen besteht, lässt sich auch ohne Tragring 3 in eine Unterputzdose, eine Abzweigdose, einen Baldachin od. dgl. einsetzen. Auf diese Weise ist ein drahtloser Installationsschalter 1 mit mechanischer Schnittstelle über die Taster 14a, 14b geschaffen. Dieser kann dann in einfacher Art und Weise modular mit dem Tragring 3 zu einem Installationsschalter 1 in Unterputzbauweise vervollständigt werden, der sowohl drahtlos als auch manuell über die Schaltwippe 7 oder einen entsprechenden Dimmerschalter betätigbar ist.

Ist anstelle eines Funkempfängers ein mit dem Mikrokontroller 25 verbundener Transceiver 24 in das Gehäusemodul 2 eingebaut, so kann der modulare Installationsschalter 1 vorteilhafterweise drahtlos mit anderen verdrahteten oder mobilen Modulen 2 kommunizieren und einen vielfältigen Mehrnutzen generieren, wie z. B. die Übertragung von Einstellwerten auf parallel laufende Modulsysteme.

In Kombination mit der adaptierbaren mechanischen Bedienoberfläche 12 mittels des Tragrings 3 und in der Ausführung als Schalter- oder Dimmerwippe 7, werden in dieser Funktion die Einstellwerte durch mechanische Betätigung direkt auf parallel laufende Schalter 1 übertragen, was einer Master-Slave-Funktion entspricht. Hierdurch kann z.B. eine elektronische Dimmereinstellung von mehreren modularen Installationsschaltern 1 übernommen werden und von mehreren Schalterpositionen im Raum bzw. Gebäude parallel eingestellt werden. Der Einsatz eines Transceivers 24 ermöglicht auch eine Funktion des beschriebenen modularen Installationsschalters 1 in einem bidirektionalen Funkbussystem. Ein besonders bevorzugtes Einsatzgebiet des erfindungsgemäßen Installationsschalters 1 ist der sogenannte Z-Wave-Funkbus.

### Bezugszeichenliste

- 1: Installationsschalter
- 2: Gehäusemodul
- 2a: Gehäuseoberteil
- 2b: Gehäuseunterteil
- 3: Tragring
- 4: Abdeckrahmen
- 5: Gehäuseaufbau
- 6a: Stößel
- 6b: Stößel
- 7: Schaltwippe
- 8: Rastelement
- 8a: Rasthaken
- 8b: Rastöffnung
- 9: Rastelement
- 10: Schnapp-/Lagerelemente
- 11: Lagerelemente
- 12: Bedienoberfläche
- 12a: Gehäuseöffnung
- 12b: Gehäuseöffnung
- 13: Gehäuseinnenraum
- 14a: Taster
- 14b: Taster
- 15: Zugangsöffnung
- 16: Klemmenblock
- 17: Anschlussklemme
- 17a: Phasenanschluss
- 17b: Nullleiteranschluss
- 17c: Ausgangsanschluss
- 17d: Ausgangsanschluss
- 18: Zugangsöffnung
- 19: Sicherungshalter
- 20: Dehndrahtsicherung
- 21: obere Leiterplatte
- 22: untere Leiterplatte
- 23: Antenne
- 24: Funkempfänger/Transceiver
- 25: Mikrokontroller
- 26: Schaltelement
- 27a: Druckkontakt
- 27b: Druckkontakt
- 28: Status-/Bedienanzeige
- 29: Spannungsversorgung

## Patentansprüche

1. Fernsteuerbarer Installationsschalter (1), insbesondere zur Betätigung einer Jalousie,
- mit einem Gehäusemodul (2) zur Unterputzmontage,
- mit gehäuseinnenseitig mindestens einer Leiterplatte (21,22) mit einem elektronisch ansteuerbaren Schaltelement (26) und mit einem Funkempfänger oder Transceiver (24) zum drahtlosen Schalten des Schaltelementes (26), sowie
- mit zwei aus dem Gehäusemodul (2) herausgeführten Tastern (14) zur manuellen Betätigung des Schaltelementes (26).

2. Installationsschalter (1) nach Anspruch 1, mit einem auf das Gehäusemodul (2) aufsetzbaren Tragring (3), der mit den Tastern (14) koppelbare Stößel (6) aufweist, die mittels einer auf den Tragring (3) aufsetzbaren Wippe (7) betätigbar sind.

3. Installationsschalter (1) nach Anspruch 1 oder 2, mit einem mit dem Funkempfänger bzw. Transceiver (24) verbundenen Mikrokontroller (25) zur Ansteuerung des Schaltelementes (26).

4. Installationsschalter (1) nach einem der Ansprüche 1 bis 3, wobei das Gehäusemodul (2) eine Bedienoberfläche (12) mit zueinander beabstandeten Gehäuseöffnungen (12a,12b) aufweist, in denen die Taster (14) von außen zugänglich einliegen.

5. Installationsschalter (1) nach einem der Ansprüche 1 bis 4, mit einem allseitig geschlossenen Gehäusemodul (2) mit einem Gehäuseoberteil (2a) und mit einem mit diesem verbundenen Gehäuseunterteil (2b).

6. Installationsschalter (1) nach einem der Ansprüche 1 bis 5, wobei die Taster (14) mit gehäuseinnenseitigen Druckkontakten (27) zusammenwirken.

7. Installationsschalter (1) nach einem der Ansprüche 2 bis 6, wobei die Stößel (6) in einem Gehäuseaufbau (5) des Tragrings (3) geführt sind.

8. Installationsschalter (1) nach einem der Ansprüche 2 bis 7, wobei der Tragring (3) einander gegenüberliegende Lagerelemente (10,11) aufweist, die für eine lösbare Schwenkverbindung mit der Wippe (7) ausgebildet sind.

9. Installationsschalter (1) nach einem der Ansprüche 2 bis 8, wobei das Gehäusemodul (2) eine Anzahl von Rastelementen (8a) zur Herstellung einer Rastverbindung (8) mit dem Tragring (3) aufweist.

10. Installationsschalter (1) nach einem der Ansprüche 2 bis 9, wobei der Tragring (3) beidseitig der Stößel (6) angeordnete Rastelemente (9) aufweist, die für eine lösbare Rastverbindung mit einem Abdeckrahmen (4) ausgebildet sind.
